# EUROPÄISCHE PATENTSCHRIFT

(11) **EP 4 049 098 B1**
(45) Veröffentlichungstag und Bekanntmachung des Hinweises auf die Patenterteilung: **03.12.2025**
(21) Anmeldenummer: 20788740.7
(22) Anmeldetag: 06.10.2020
(51) Int. Cl.: G05B 19/042, G05B 23/02, G06Q 10/06

(54) **SYSTEM UND VERFAHREN ZUR ERFASSUNG UND AUSWERTUNG VON INSTANDHALTUNGS- UND/ODER WARTUNGSRELEVANTEN MESS-, BETRIEBS- UND/ODER PRODUKTIONSDATEN**
SYSTEM AND METHOD FOR DETECTING AND EVALUATING MAINTENANCE- AND/OR SERVICING-RELEVANT MEASUREMENT, OPERATIONAL, AND/OR PRODUCTION DATA
SYSTÈME ET PROCÉDÉ DE DÉTECTION ET D'ÉVALUATION DE DONNÉES DE MESURE, DE FONCTIONNEMENT ET/OU DE PRODUCTION PERTINENTES EN TERMES D'ENTRETIEN ET DE MAINTENANCE

(30) Priorität: 22.10.2019 DE 102019128514
(43) Veröffentlichungstag der Anmeldung: 31.08.2022
(73) Patentinhaber: KHS GmbH, 44143 Dortmund (DE)
(72) Erfinder: VOLLMER, Karsten, 44267 Dortmund (DE); EHMER, Wilfried, 44227 Dortmund (DE)
(86) Internationale Anmeldenummer: PCT/EP2020/077954
(87) Internationale Veröffentlichungsnummer: WO 2021/078508

(56) Entgegenhaltungen:
- WO-A1-2018/037133
- US-A1- 2018 356 800
- N N: "General Terms and Conditions for remote diagnostics and maintenance of GF Machining Solutions International SA (05.2017)", 1 May 2017 (2017-05-01), pages 1 - 7, XP055749429, Retrieved from the Internet <URL:https://www.gfms.com/content/dam/gfac_country_CH/PDF/Ferndiagnose/2017/General%20Terms%20and%20Conditions%20for%20remote%20diagnostics%20and%20maintenance_final_ENG.pdf> [retrieved on 20201111]
- MADHIKERMI MANIK ET AL: "Key data quality pitfalls for condition based maintenance", 2017 2ND INTERNATIONAL CONFERENCE ON SYSTEM RELIABILITY AND SAFETY (ICSRS), IEEE, 20 December 2017 (2017-12-20), pages 474 - 480, XP033310129, DOI: 10.1109/ICSRS.2017.8272868

## Beschreibung

Die Erfindung bezieht sich auf ein System und ein Verfahren zur Erfassung und Auswertung von instandhaltungs- und/oder wartungsrelevanten Mess-, Betriebs- und/oder Produktionsdaten betreffend eine mehrere, zusammenwirkende Maschinen oder eine Einzelmaschine umfassende Anlage, insbesondere der Getränke- und/oder Verpackungsindustrie, und/oder betreffend zumindest einen in der Anlage durchgeführten Prozess.

Im Bereich der Getränke- und/oder Verpackungsindustrie finden eine Vielzahl von unterschiedlich aufgebauten Maschinen Anwendung, welche vorzugsweise über geeignete Transporteinrichtungen miteinander verbunden eine Anlage bilden. Derartige Anlagen dienen beispielsweise zum Behandeln von Behältern, zum Füllen von Behältern mit Füllgut und/oder Verpacken von Produkten, insbesondere im Lebensmittelbereich, wobei die Produkte von unterschiedlichster physikalischer Natur sein können.

Hierzu zählen beispielsweise Getränkeabfüllanlagen, die mehrere Behandlungsmaschinen umfassen können, die durch Förderanlagen miteinander verbunden sind und auf denen Behälter zwischen den einzelnen Maschinen transportiert werden. Auch kann die Herstellung der Behälter an sich erfolgen. Die Maschinen können beispielsweise durch Silo- und/oder Sortier-/Ausrichtmaschinen, insbesondere für Medien, Vorformlinge, Verschlüsse, etc., Reinigungsmaschinen, Füllmaschinen, Einpacker, Auspacker, Etikettiermaschinen, Bedruckungsmaschinen, Palettiermaschinen, Streckblasmaschinen usw. gebildet sein. In einer Variante der Erfindung soll als Anlage auch eine Einzelmaschine verstanden werden, wobei die Zu- und Ableitung von Verpackungsmitteln, Behältern, Formteilen und dergleichen den Transport bzw. die Transportmittel darstellen. Zur Steuerung und/oder Regelung der genannten Maschinen und/oder der über diese laufenden Prozesse sind entweder dezentrale, maschinenbezogene und/oder zentrale Steuereinheiten mit der zugehörigen Steuersoftware vorgesehen.

Beispielsweise offenbart die WO 2018/037133 A1 ein Verfahren sowie eine Vorrichtung zur Fernüberwachung von Anlagen, insbesondere einer Verpackungsanlage oder einer Anlage zur Herstellung von Getränken. Die Anlage umfasst dabei eine Vielzahl von Arbeitseinheiten, wobei sich zwischen den einzelnen Arbeitseinheiten jeweils Transporteinheiten befinden, welche die Behältnisse von einer zur nächsten Arbeitsstation befördern, sowie Messeinrichtungen, welche Messwerte der einzelnen Arbeitseinheiten erfassen. Ferner weist die Vorrichtung eine Datensammeleinrichtung auf, mit welcher die Arbeitseinheiten wenigstens teilweise und/oder wenigstens zeitweise zur Datenübertragung verbunden sind und welche die für die Arbeitseinheiten relevanten Daten und/oder Messwerte sammelt, wobei die gesammelten Daten der Datensammeleinrichtung an eine Datenerfassungseinrichtung übertragen werden. Die Datenerfassungseinheit ist dabei derart konfiguriert, dass diese gefilterte bzw. ausgewählte Daten oder Anteile davon an unterschiedliche Empfänger übermittelt, wobei durch den Nutzer der Anlage bzw. Anlagenbetreiber wenigstens teilweise, insbesondere vollständig, bestimmbar ist, welche Daten an welchen Empfänger übermittelt werden. Die Vorauswahl der zu übertragenden Daten erfolgt dabei durch eine Datenselektoreinrichtung, welche sich vorzugsweise in der Datenübertragungseinrichtung und/oder Datensammeleinrichtung befindet. Somit kann bevorzugt der Nutzer der Anlage insbesondere über die Art und den Umfang der zu übertragenden Daten bestimmen. Da der Nutzer einer Anlage, insbesondere aus Sicherheits- oder Geheimhaltungsinteresse, üblicherweise vermeidet, Daten an Dritte weiterzugeben, sind die an den Anlagenhersteller übermittelten Daten oftmals von geringer Qualität. Außerdem werden dem Anlagenhersteller so wenig wie möglich Daten zur Verfügung gestellt, so dass dieser keine Rückschlüsse auf Prozesse und/oder Produktion, wie z.B. Ausstoßleistung, Rezepturen usw., ziehen kann.

Für Hersteller von derartigen Maschinen und Anlagen im Bereich der Getränke- und/oder Verpackungsindustrie ist es u.a. wünschenswert, auch nach der Auslieferung der Maschine bzw. Anlage an den Kunden bzw. Maschinenbetreiber kontinuierlich Mess-, Betriebs- und/oder Prozessdaten von der in Betrieb befindlichen Maschine bzw. Anlage sowie die damit ausgeführten Prozesse, insbesondere Produktionsprozesse, zu erhalten, vorzugsweise kontinuierlich über die gesamte Lebensdauer. Hierdurch können tiefergehende und belastbare Erkenntnisse über den technischen Zustand der eigenen Maschinen und/oder Anlagen beispielsweise abhängig von der Betriebsdauer und/oder dem Aufstellungsort und/oder der Betriebsart der Maschine/Anlage sowie abhängig von den durchgeführten Wartungsmaßnahmen gewonnen werden. Die Maschinenbetreiber sind üblicherweise nicht bereit, die genannten Daten kontinuierlich und umfassend den Maschinenherstellern zur Verfügung zu stellen. Damit entgehen den Maschinenherstellern Komponenten- und/oder Prozesskenntnisse über die Qualität, das Betriebsverhalten sowie Mängel der selbst hergestellten Maschinen und Anlagen. Neben den davon ableitbaren Verbesserungsmöglichkeiten der Maschine/Anlage selbst, könnten nach Auswertung derartiger Daten dem jeweiligen Maschinenbetreiber auch optimierte Wartungs- und Servicedienstleistungen angeboten werden. Es ist daher erforderlich, einen Anreiz für den Maschinenbetreiber zu schaffen, dem Maschinenbetreiber oder dessen Kooperationspartner aktuelle Mess-, Betriebs- und/oder Prozessdaten einer in Betrieb befindlichen Anlage kontinuierlich bereitzustellen.

Auch ist die kontinuierliche Bereitstellung von aktuellen Mess-, Betriebs- und/oder Prozessdaten einer Maschine und/oder Anlage in ausreichender Quantität und/oder Qualität Voraussetzung für die Anwendung von vorausschauenden Instandhaltungsverfahren ("predictive maintenance"). Hierzu ist es u.a. erforderlich, während des Betriebs einer Maschine/Anlage bzw. des Ablaufs eines Prozesses ausgewählte Mess-, Betriebs- und/oder Prozessdaten beim Maschinenbetreiber vor Ort zu erfassen und diese dem Maschinenhersteller zur Auswertung möglichst kontinuierlich und zeitnah zur Verfügung zu stellen. Derartige vorausschauende Instandhaltungsverfahren nutzen Mess-, Betriebs- und/oder Produktionsdaten von Maschinen und Anlagen für die Ableitung von Wartungsinformationen. Ziel dabei ist, die Maschinen und Anlagen proaktiv zu warten und Störungszeiten zu minimieren, insbesondere einen unerwarteten Ausfall von Maschinen und Anlagen zu verhindern. Im Optimalfall kann durch frühzeitig und proaktiv eingeleitete Wartungsmaßnahmen das tatsächliche Eintreten von Störungen effektiv verhindert werden.

Der Erfindung liegt die Aufgabe zugrunde, ein System und ein zugehöriges Verfahren zur Erfassung und Auswertung von instandhaltungs- und/oder wartungsrelevanten Mess-, Betriebs- und/oder Prozessdaten in einer Anlage der Getränke- und/oder Verpackungsindustrie zu schaffen, mittels dem zusätzliche Anreize für den Anlagenbetreiber geschaffen werden können, zumindest die für die Instandhaltung und/oder Wartung der Anlage relevanten Mess-, Betriebs- und/oder Prozessdaten an den Anlagenhersteller oder dessen Servicepartner kontinuierlich bereitzustellen. Diese Aufgabe wird durch ein System gemäß den Merkmalen des unabhängigen Patentanspruchs 1 sowie durch ein Verfahren gemäß den Merkmalen des unabhängigen Patentanspruches 13 gelöst. Die abhängigen Ansprüche betreffen dabei besonders vorteilhafte Weiterbildungen der Erfindung.

Die Erfindung bezieht sich auf ein System zur Erfassung und Auswertung von instandhaltungs- und/oder wartungsrelevanten Mess-, Betriebs- und/oder Prozessdaten umfassend eine mehrere, zusammenwirkende Maschinen oder eine Einzelmaschine umfassende Anlage der Getränke- und/oder Verpackungsindustrie, wobei die instandhaltungs- und/oder wartungsrelevanten Mess-, Betriebs- und/oder Prozessdaten die Anlage und/oder zumindest einen in der Anlage durchgeführten Prozess betreffen, wobei die Anlage mehrere Mess- und/oder Sensoreinheiten zur Erfassung der instandhaltungs- und/oder wartungsrelevanten Mess-, Betriebs- und/oder Prozessdaten der einzelnen Maschinen und/oder der einzelnen Prozesse und zumindest eine Datensammeleinheit aufweist, wobei die von den Mess- und/oder Sensoreinheiten erfassten Mess-, Betriebs- und/oder Prozessdaten über zumindest ein Datenübertragungsnetzwerk der Anlage an die Datensammeleinheit übertragen und in dieser gesammelt werden, wobei in dem System weiterhin eine dezentrale, außerhalb der Anlage angeordnete Anlagenserviceeinrichtung mit zumindest einer Datenauswerteeinheit und zumindest einer Diagnose- und Fernwartungseinheit zur Bereitstellung von Instandhaltungs- und/oder Wartungsdiensten vorgesehen ist, wobei zumindest die instandhaltungs- und/oder wartungsrelevanten Mess-, Betriebs- und/oder Prozessdaten von der Datensammeleinheit zur Auswertung durch die Anlagenserviceeinrichtung außerhalb der Anlage bereitgestellt werden, wobei mittels einer in der Datenauswerteeinheit ausgeführten Auswerte- und Analyseroutine zumindest die Quantität und/oder die Qualität der von der Datensammeleinheit bereitgestellten, instandhaltungs- und/oder wartungsrelevanten Mess-, Betriebs- und/oder Prozessdaten ermittelt werden und abhängig davon die Bereitstellung der Instandhaltungs- und/oder Wartungsdienste gesteuert wird. Besonders vorteilhaft ermöglicht das erfindungsgemäße System eine Bewertung und Analyse der von einem Anlagenbetreiber oder dessen Servicepartner zur Verfügung gestellten Mess-, Betriebs- und/oder Prozessdaten, und zwar derjenigen, die Relevanz für die von einem Anlagenbetreiber oder dessen Servicepartner bereitgestellten Instandhaltungs- und Wartungsdienste aufweisen. Die Erfassung der Qualität und/oder Quantität der Daten ermöglicht eine "Belohnung" des Anlagenbetreibers für die Bereitstellung der Daten, d.h. die Schaffung eines Anreizes, dass dieser eine kontinuierliche und umfassende Bereitstellung seiner Anlagendaten in Erwägung zieht. Beispielsweise können Instandhaltungs- und/oder Wartungsdienste zu- oder abgeschaltet werden und/oder deren Dienstleistungsumfang vergrößert oder reduziert und/oder die Bereitstellung dessen priorisiert werden. Hierdurch erhält der Anlagenbetreiber einen Mehrwert ohne zusätzliche Kosten oder ggf. auch eine Kosteneinsparung bei erhöhter oder zumindest gleichbleibender Anlagenleistung.

Weiterhin vorteilhaft ist die Diagnose- und Fernwartungseinheit zur Steuerung der Bereitstellung der Instandhaltungs- und/oder Wartungsdienste eingerichtet. Damit können in der Anlagenserviceeinrichtung unmittelbar nach der Auswertung und Analyse der erhaltenen Mess-, Betriebs- und/oder Prozessdaten die bereitgestellten Instandhaltungs- und/oder Wartungsdienste angepasst werden oder bei nicht ausreichenden Daten diese abgeschaltet werden.

Die Bereitstellung der Instandhaltungs- und/oder Wartungsdienste kann insbesondere eine Durchführung der Instandhaltungs- und/oder Wartungsdienste in der Anlage umfassen.

Erfindungsgemäß werden abhängig von der ermittelten Quantität und/oder Qualität der instandhaltungs- und/oder wartungsrelevanten Mess-, Betriebs- und/oder Prozessdaten die zur Erfassung der instandhaltungs- und/oder wartungsrelevanten Mess-, Betriebs- und/oder Prozessdaten vorgesehenen Mess- und/oder Sensoreinheiten gesteuert. Die Steuerung erfolgt hierbei vorzugsweise über eine in der Anlagensteuereinheit der Anlage ausgeführte Anlagensteuerroutine, wobei hierzu die Diagnose- und Fernwartungseinheit in Kommunikationsverbindung mit der Anlagensteuereinheit steht. Damit ist besonders vorteilhaft eine von der Quantität und/oder Qualität abhängige Ansteuerung der Mess- und/oder Sensoreinheiten in der Anlage möglich. So werden die Mess- und/oder Sensoreinheiten abhängig von der Qualität und/oder der Quantität der bereitgestellten Mess-, Betriebs- und/oder Prozessdaten ein- oder ausgeschaltet werden oder alternativ zu- oder weggeschaltet. Durch eine Zuschaltung von weiteren Mess- und/oder Sensoreinheiten kann beispielsweise eine Erhöhung der Qualität und/oder der Quantität erreicht werden.

Gemäß einer nochmals weiteren vorteilhaften Ausführungsvariante können zur Ermittlung der Qualität und/oder Quantität von der Auswerte- und Analyseroutine die bereitgestellten Mess-, Betriebs- und/oder Prozessdaten analysiert und mit vorgegebenen Referenzwerten, beispielsweise einer Soll-Qualität bzw. einer Soll-Quantität verglichen werden und abhängig vom Vergleichsergebnis bestimmt werden, ob die bereitgestellten instandhaltungs- und/oder wartungsrelevanten Mess-, Betriebs- und/oder Prozessdaten ausreichend zur Bereitstellung der Instandhaltungs- und/oder Wartungsdienste sind.

Weiterhin vorteilhaft weisen die instandhaltungs- und/oder wartungsrelevanten Mess-, Betriebs- und/oder Prozessdaten unterschiedliche Datentypen und/oder Datenarten auf und in der Datenauswerteeinheit wird den unterschiedlichen Datentypen und/oder Datenarten der instandhaltungs- und/oder wartungsrelevanten Mess-, Betriebs- und/oder Prozessdaten eine wertgebende Komponente zugeordnet. Die wertgebende Komponente zeigt hierbei beispielsweise die Instandhaltungs- und/oder Wartungsrelevanz eines Datentyps und/oder einer Datenarten an. Besonders vorteilhaft werden in der Anlagenserviceeinrichtung die erhaltenen Daten darauf bewertet, welchen Einfluss diese für auf die Bereitstellung der einzelne Instandhaltungs- und/oder Wartungsmaßnahmen haben. Es ist damit eine Priorisierung der unterschiedlichen Datentypen und/oder Datenarten möglich.

In einer vorteilhaften Ausführungsvariante wird zur Ermittlung der Quantität der instandhaltungs- und/oder wartungsrelevanten Mess-, Betriebs- und/oder Prozessdaten die Anzahl der bereitgestellten Datenpakete oder die Anzahl von vordefinierten Datenmengeneinheiten ermittelt und mit einem Referenzwert, vorzugsweise einer Soll-Quantität verglichen. Hierdurch ist besonders vorteilhaft eine individuelle und einfache Ermittlung der Quantität der bereitgestellten Daten möglich.

Besonders vorteilhaft können abhängig von der bereitgestellten Qualität und/oder Quantität der instandhaltungs- und/oder wartungsrelevanten Mess-, Betriebs- und/oder Prozessdaten den Wartungs- und/oder Instandhaltungsdiensten zugeordnete Vergütungsdaten angepasst werden und/oder in einem Bonussystem Bonuspunkte erfasst werden. Bei hinsichtlich Qualität und/oder Quantität ausreichender Bereitstellung von relevanten Daten durch den Anlagenbetreiber kann dieser damit nicht nur optimierte Dienste, sondern auch monetäre Vergünstigungen erlangen, wodurch ein zusätzlicher Anreiz entsteht.

In einer vorteilhaften Ausführungsvariante wird abhängig von der bereitgestellten Qualität und/oder Quantität der instandhaltungs- und/oder wartungsrelevanten Mess-, Betriebs- und/oder Prozessdaten zusätzliche Wartungs- und/oder Instandhaltungsdienste und/oder der Anlage eine höhere Wartungs- und/oder Instandhaltungspriorität zugeordnet. Hierdurch erhält der Anlagenbetreiber einen zusätzlichen Anreiz, instandhaltungs- und/oder wartungsrelevanten Mess-, Betriebs- und/oder Prozessdaten zur Verfügung zu stellen.

Gemäß einer weiteren Ausführungsvariante der Erfindung erfolgt die Bereitstellung der instandhaltungs- und/oder wartungsrelevanten Mess-, Betriebs- und/oder Prozessdaten direkt an die Anlagenserviceeinrichtung über eine drahtlose oder drahtgebundene Datenübertragungsschnittstelle. Alternativ können die instandhaltungs- und/oder wartungsrelevanten Mess-, Betriebs- und/oder Prozessdaten von der Anlage an eine "Cloud-Speicher-Einrichtung" oder jede andere Speichereinrichtung übertragen werden. Vorteilhaft können die relevanten Daten entweder direkt an die Anlagenserviceeinrichtung übertragen werden oder in einem geschützten Bereich außerhalb der Anlage für die Anlagenserviceeinrichtung bereitgestellt werden.

Ebenfalls ist Gegenstand der Erfindung ein Verfahren zur Erfassung und Auswertung von instandhaltungs- und/oder wartungsrelevanten Mess-, Betriebs- und/oder Prozessdaten in einem System umfassend eine oder mehrere, zusammenwirkende Maschinen oder eine Einzelmaschine aufweisende Anlage der Getränke- und/oder Verpackungsindustrie, mit zumindest einen in der Anlage durchgeführten Prozess, wobei die Anlage mehrere Mess- und/oder Sensoreinheiten zur Erfassung der instandhaltungs- und/oder wartungsrelevanten Mess-, Betriebs- und/oder Prozessdaten der einzelnen Maschinen und/oder der einzelnen Prozesse und zumindest eine Datensammeleinheit aufweist, wobei die von den Mess- und/oder Sensoreinheiten erfassten Mess-, Betriebs- und/oder Prozessdaten über zumindest ein Datenübertragungsnetzwerk der Anlage an die Datensammeleinheit übertragen und in dieser gesammelt werden, wobei in dem System eine dezentrale, außerhalb der Anlage angeordnete Anlagenserviceeinrichtung umfassend zumindest eine Datenauswerteeinheit und zumindest eine Diagnose- und Fernwartungseinheit zur Bereitstellung von Instandhaltungs- und/oder Wartungsdiensten vorgesehen ist, wobei zumindest die instandhaltungs- und/oder wartungsrelevanten Mess- , Betriebs- und/oder Prozessdaten von der Datensammeleinheit zur Auswertung durch die Anlagenserviceeinrichtung außerhalb der Anlage bereitgestellt werden, wobei mittels einer in der Datenauswerteeinheit ausgeführten Auswerte- und Analyseroutine zumindest die Quantität und/oder die Qualität der von der Datensammeleinheit bereitgestellten, instandhaltungs- und/oder wartungsrelevanten Mess-, Betriebs- und/oder Prozessdaten ermittelt werden und abhängig davon die Bereitstellung der Instandhaltungs- und/oder Wartungsdienste gesteuert wird.

Der Ausdruck "im Wesentlichen" bzw. "etwa" bedeutet im Sinne der Erfindung Abweichungen vom jeweils exakten Wert um bis +/- 10%, bevorzugt um bis +/- 5%, und/oder Abweichungen in Form von für die Funktion unbedeutenden Änderungen.

Weiterbildungen, Vorteile und Anwendungsmöglichkeiten der Erfindung im Rahmen der Ansprüche ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung erklärt.

Die Erfindung wird im Folgenden anhand der Figuren an Ausführungsbeispielen näher erläutert. Es zeigen:
- Fig. 1: beispielhaft ein schematisches Blockschaltbild des erfindungsgemäßen Systems;
- Fig. 2: beispielhaft ein schematisches Blockschaltbild des erfindungsgemäßen Systems mit einem alternativen Datenübertragungskonzept und
- Fig. 3: beispielhaft ein schematisches Blockschaltbild des erfindungsgemäßen Systems mit einer weiteren Datenübertragungsnetz in der Anlage.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur in schematischer Ansicht zur Erläuterung der Arbeitsweise dargestellt. Insbesondere dienen die Darstellungen der Figuren nur der Erläuterung des grundlegenden Prinzips der Erfindung.

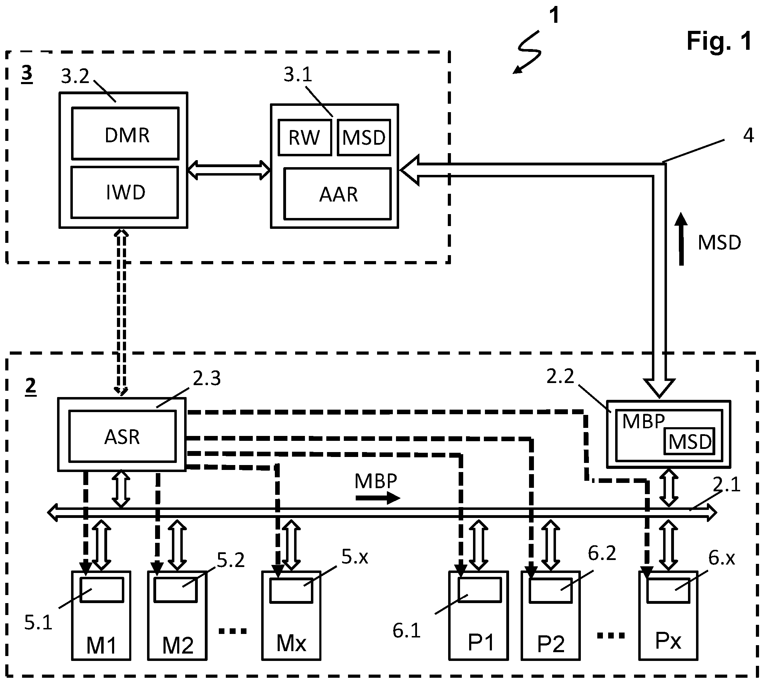

In Fig. 1 ist in einem schematischen Blockschaltbild beispielhaft ein erfindungsgemäßes System 1 zur Erfassung und Auswertung von instandhaltungs- und/oder wartungsrelevanten Mess-, Betriebs- und/oder Prozessdaten MSD betreffend eine Anlage 2 der Getränke- und/oder Verpackungsindustrie sowie eine dezentrale Anlagenserviceeinrichtung 3 dargestellt. Die erfindungsgemäße Anlage 2 ist zur Bereitstellung einer Vielzahl von Mess-, Betriebs- und/oder Prozessdaten MBP eingerichtet, wobei nur ein Teil davon für die Instandhaltung und/oder Wartung der Anlage 2 Relevanz besitzt. Diese werden nachfolgend als instandhaltungs- und/oder wartungsrelevanten Mess-, Betriebs- und/oder Prozessdaten MSD bezeichnet, welche unterschiedliche Datentypen und/oder Datenarten aufweisen können.

Die in Figur 1 dargestellte Anlage 2 wurde von einem Anlagenhersteller hergestellt und wird von einem Anlagenbetreiber oder dessen Servicepartner betrieben. Der Anlagenbetreiber ist üblicher Weise der Kunde des Anlagenherstellers, welcher den Anlagenbetreiber im Nachgang zur Auslieferung der Anlage 2 auch Instandhaltungs- und Wartungsdienstleistungen anbietet oder Ersatzteile für die Anlage bzw. die darin aufgenommenen Maschinen M1 bis Mx liefert.

Die Steuerung und/oder Bereitstellung dieser "Services" bzw. "Dienste" und/oder Ersatzteilversorgung erfolgt zumindest teilweise über eine dezentrale Anlagenserviceeinrichtung 3, die üblicher Weise örtlich getrennt von der Anlage 2 ist und vom Anlagenhersteller oder einem Servicepartner des Anlagenherstellers betrieben wird. Vorzugsweise können über eine derartige Anlagenserviceeinrichtung 3 auch mehrere Anlagen 2 bedient werden.

Die Anlagenserviceeinrichtung 3 ist beispielsweise auch zur Überwachung des laufenden Betriebes der Anlage 2 und zur Bereitstellung diverser Wartungs- und/oder Instandhaltungsdienste IWD ausgebildet und eingerichtet. Hierzu weist die dezentrale Anlagenserviceeinrichtung 3 zumindest eine Datenauswerteeinheit 3.1 und zumindest eine Diagnose- und Fernwartungseinheit 3.2 auf, wobei mittels der Diagnose- und Fernwartungseinheit 3.2 vorzugsweise die Bereitstellung der Wartungs- und/oder Instandhaltungsdienste IWD gesteuert wird. Beispielsweise können mittels der Wartungs- und/oder Instandhaltungsdienste IWD auch vorausschauende Instandhaltungsverfahren ("predictive maintenance") oder Zustandsüberwachungsverfahren ("condition monitoring") abgebildet bzw. realisiert werden. Die Anlagenserviceeinrichtung 3 kann auch über eine, beispielsweise in der Diagnose- und Fernwartungseinheit 3.2 ausgeführte Datenmanagementroutine DMR mit einem übergeordneten Datenmanagementsystem und/oder Ressourcenplanungs- und/oder Abrechnungssystem des Anlagenherstellers oder dessen Servicepartner verbunden sein (nicht in den Figuren dargestellt).

Die Datenkommunikation zwischen der Anlage 2 und der dezentralen Anlagenserviceeinrichtung 3 erfolgt vorzugsweise über eine drahtlose oder drahtgebundene Datenübertragungsschnittstelle 4, und zwar beispielsweise unter Verwendung bekannter Datenübertragungsprotokolle. Zur Übertragung der erforderlichen großen Datenmengen finden aus dem Big-Data-Umfeld bekannte Übertragungstechniken und Datenbankensysteme Verwendung. Auch können im Bereich des "Internet-of-Things" (IoT) bekannte Softwaremodule unterschiedlicher Anbieter in der Anlagenserviceeinrichtung 3 zum Einsatz kommen.

Die Anlage 2 der Getränke- und/oder Verpackungsindustrie weist mehrere zusammenwirkende Maschinen M1 bis Mx auf, welche durch unterschiedlichste Maschinen M1 bis Mx im Bereich der Getränke- und/oder Verpackungsindustrie gebildet sein können. Beispielsweise kann die Anlage 2 eine Getränkeabfüllanlage oder eine Behälterbehandlungsanlage bilden, deren einzelne Maschinen M1 bis Mx beispielsweise über Transporteinrichtungen bzw. Transportmittel miteinander verbunden sind, über welche der Behältertransport bzw. das Behälterhandling erfolgt.

Die Maschinen M1 bis Mx können beispielsweise in Form von Reinigungsmaschinen, Füllmaschinen, Einpacker, Auspacker, Etikettiermaschinen, Bedruckungsmaschinen, Palettiermaschinen, Streckblasmaschinen etc. realisiert sein. Über die Anlage 2 bzw. deren Maschinen M1 bis Mx können auch unterschiedlichste Prozesse P1 bis Px im Bereich der Getränke- und/oder Verpackungsindustrie abgebildet bzw. ausgeführt werden, beispielsweise Reinigungsprozesse, Füllprozesse, Packprozesse und/oder sonstige Behälterbehandlungsprozesse.

Bei dem in Figur 1 dargestellten Blockschaltbild des erfindungsgemäßen Systems 1 weist die Anlage 2 beispielhaft eine erste bis x-te Maschine M1 bis Mx zur Bereitstellung von ersten bis x-ten Prozesses P1 bis Px auf. Hierbei sind in Figur 1 die unterschiedlichen Maschinen M1 bis Mx und Prozesse P1 bis Px, welche in Bezug zu einander stehen, in vereinfachter Darstellung durch schematische Schaltsymbole angedeutet.

Zur maschinen- und/oder prozessindividuellen Erfassung der Mess-, Betriebs- und/oder Prozessdaten MBP der einzelnen Maschinen M1 bis Mx und/oder der einzelnen Prozesse P1 bis Px in der Anlage 2 sind mehrere Mess- und/oder Sensoreinheiten 5.1 bis 5.x, 6.1 bis 6.x vorgesehen, wobei vorzugsweise zumindest eine der Mess- und/oder Sensoreinheiten 5.1 bis 5.x, 6.1 bis 6.x jeweils einer Maschine M1 bis Mx bzw. jeweils einem Prozess P1 bis Px zugeordnet ist. Im vorliegenden Ausführungsbeispiel ist beispielsweise der ersten Maschine M1 eine erste Mess- und/oder Sensoreinheit 5.1, der zweiten Maschine M2 eine zweite Mess- und/oder Sensoreinheit 5.2 und der x-ten Maschine Mx eine x-te Mess- und/oder Sensoreinheit 5.x zugeordnet. Analog dazu ist dem ersten Prozess P1 eine erste Mess- und/oder Sensoreinheit 6.1, dem zweiten Prozess P2 eine zweite Mess- und/oder Sensoreinheit 6.2 und dem x-ten Prozess Px eine x-te Mess- und/oder Sensoreinheit 6.x zugeordnet.

Die Mess- und/oder Sensoreinheiten 5.1 bis 5.x, 6.1 bis 6.x sind zur Messung und/oder Erfassung von Messparametern unterschiedlichster physikalischer Eigenschaften ausgebildet. Neben physikalischen Größen wie beispielsweise Temperatur, Schwingungen, Position, Lage etc. können auch beliebigste optische und/oder akustische Messparameter erfasst werden.

Die Anlage 2 weist ferner zumindest ein Datenübertragungsnetzwerk 2.1, zumindest eine Datensammeleinheit 2.2 sowie wenigstens eine Anlagensteuereinheit 2.3 auf, wobei die Datensammeleinheit 2.2 und die Anlagensteuereinheit 2.3 an das Datenübertragungsnetzwerk 2.1 angeschlossen sind. Über das Datenübertragungsnetzwerk 2.1 ist vorzugsweise eine bidirektionale Übertragung von Daten innerhalb der Anlage 2 möglich, welche entweder drahtgebunden oder drahtlos erfolgen kann. Auch können industrielle Bussysteme für die Datenübertragung und/oder Steuerung der Maschinen M1 bis Mx und/oder Prozesse P1 bis Px Verwendung finden. Die Steuerung der Anlage 2 erfolgt vorzugsweise über eine in der Anlagensteuereinheit 2.3 ausgeführte Anlagensteuerroutine ASR, welche beispielsweise auch zur Ansteuerung und/oder Auswertung der Mess- und/oder Sensoreinheiten 5.1 bis 5.x, 6.1 bis 6.x ausgebildet sein kann. Auch können weitere, separate Steuer- und Regeleinheiten den einzelnen Maschinen M1 bis Mx und/oder Prozessen P1 bis Px zugeordnet sein.

Die von den Mess- und/oder Sensoreinheiten 5.1 bis 5.x, 6.1 bis 6.x erfassten Mess-, Betriebs- und/oder Prozessdaten MBP werden in der Anlage 2 über das Datenübertragungsnetzwerk 2.1 an die Datensammeleinheit 2.2 übertragen und in dieser gesammelt. Die Datensammeleinheit 2.2. ist in der Anlage 2 vorzugsweise zum kontinuierlichen Sammeln sämtlicher erfassten Mess-, Betriebs- und/oder Prozessdaten MBP eingerichtet, wodurch eine umfangsreiche Datensammlung beispielsweise in Form einer "Big-Data-Datenbank" entsteht, welche eine umfangreiche Analyse des technischen Zustandes der Anlage 2 bzw. deren Maschinen M1 bis Mx und/oder der in der Anlage 2 ausgeführten Prozesse P1 bis Px ermöglicht. Dazu zählen u.a. auch zeit- und prozesskritische Daten, welche für den laufenden Betrieb der Anlage 2 und/oder für die Ausführung der unterschiedlichen Prozesse P1 bis Px zwingend erforderlich sind und kontinuierlich überwacht und ausgewertet werden müssen.

Die von der Datensammeleinheit 2.2 gesammelten Mess-, Betriebs- und/oder Prozessdaten MBP werden zumindest teilweise zur Auswertung durch die dezentrale Anlagenserviceeinrichtung 3 bereitgestellt, und zwar vorzugsweise an einem Speicherort außerhalb der Anlage 2. Hierfür bestehen unterschiedliche Realisierungsmöglichkeiten.

In einer ersten Ausführungsvariante werden zumindest die für die Instandhaltung und/oder Wartung der Anlage 2 relevanten Mess-, Betriebs- und/oder Prozessdaten MSD bereitgestellt, und zwar beispielsweise über eine Datenübertragungsschnittstelle 4 von der Datensammeleinheit 2.2 direkt an die dezentrale Anlagenserviceeinrichtung 3 übertragen. Die in Figur 1 dargestellte Datenübertragungsschnittstelle 4 kann entweder drahtlos oder drahtgebunden ausgebildet sein.

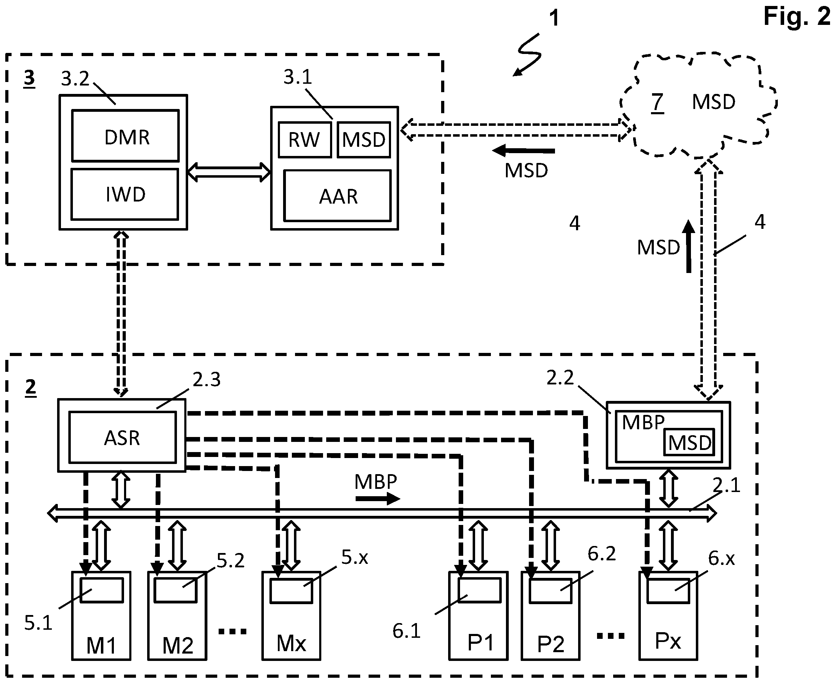

Alternativ kann die Übertragung zunächst an eine Cloud-Speicher-Einrichtung 7 erfolgen. Figur 2 zeigt beispielhaft ein schematisches Blockschaltbild des erfindungsgemäße System 1 unter Verwendung einer Cloud-Speicher-Einrichtung 7. Die in der Cloud-Speicher-Einrichtung 7 bereitgestellten instandhaltungs- und/oder wartungsrelevanten Mess-, Betriebs- und/oder Prozessdaten MSD können dann von der Anlagenserviceeinrichtung 3 abgerufen werden. Vorteilhaft ist damit kein direkter Zugriff auf die Anlage 2 bzw. dessen Datenübertragungsnetzwerk 2.1 durch die Anlageserviceeinrichtung 3 erforderlich, d.h. die Daten werden außerhalb der Anlage 2 in einem geschützten Datenbereich bereitgestellt und können damit ggf. auch zeitverzögert zur Verfügung gestellt werden. Von allen gesammelten Mess-, Betriebs- und/oder Prozessdaten MBP werden vorzugsweise nur diejenigen Daten MSD übertragen bzw. bereitgestellt, denen Relevanz für die Instandhaltung und/oder Wartung der Anlage 2 zukommt.

Vorzugsweise werden von der Datensammeleinheit 2.2 die für die Instandhaltung und/oder Wartung der Anlage 2 relevanten Mess-, Betriebs- und/oder Prozessdaten MSD aus allen gesammelten Mess-, Betriebs- und/oder Prozessdaten MBP ausgefiltert und/oder getrennt von den anderen Daten hinterlegt. Hierzu können entweder in der Datensammeleinheit 2.2 oder in der Anlagensteuereinheit 2.3 geeignete, in Figur 1 nicht dargestellte Datenfiltereinheiten vorgesehen sein.

Alternativ können nur die für die Instandhaltung und/oder Wartung der Anlage 2 relevanten Mess-, Betriebs- und/oder Prozessdaten MSD über die zugeordneten Mess- und/oder Sensoreinheiten 5.1 bis 5.x, 6.1 bis 6.x erfasst werden und an die Datensammeleinheit 2.2 bereits gebündelt übermittelt werden.

Auch können den Mess- und/oder Sensoreinheiten 5.1 bis 5.x, 6.1 bis 6.x zur Erfassung der Mess-, Betriebs- und/oder Prozessdaten MBP der einzelnen Maschinen M1 bis Mx und/oder den einzelnen Prozessen P1 bis Px Filtereinheiten nachgeschaltet sein, über welche die die Instandhaltung und/oder Wartung der Anlage 2 relevanten Mess-, Betriebs- und/oder Prozessdaten MSD ausgefiltert werden.

Erfindungsgemäß wird mittels der Datenauswerteeinheit 3.1 der Anlagenserviceeinrichtung 3 zumindest die Quantität und/oder die Qualität der für die Instandhaltung und/oder Wartung der Anlage 2 relevanten Mess-, Betriebs- und/oder Prozessdaten MSD ermittelt und abhängig davon die von der Anlagenserviceeinrichtung 3 bereitgestellten Instandhaltungs- und/oder Wartungsdienste IWD gesteuert. Zusätzlich werden auch abhängig von der Auswertung der Quantität und/oder die Qualität der instandhaltungs- und/oder wartungsrelevanten Mess-, Betriebs- und/oder Prozessdaten MSD die zugehörigen Mess- und/oder Sensoreinheiten 5.1 bis 5.x, 6.1 bis 6.x und/oder die Anlagenleistung gesteuert. Im Falle der Mess- und/oder Sensoreinheiten 5.1 bis 5.x, 6.1 bis 6.x werden diese beispielsweise ein- oder ausgeschaltet sowie zu- oder weggeschaltet.

Zur Auswertung der instandhaltungs- und/oder wartungsrelevanten Mess-, Betriebs- und/oder Prozessdaten MSD wird in der Datenauswerteeinheit 3.1 beispielsweise eine Auswerte- und Analyseroutine AAR ausgeführt, mittels der die bereitgestellten Daten MSD hinsichtlich Qualität und/oder Quantität bewertet werden können, beispielsweise mit einem vorgegebenen Referenzwerten RW verglichen werden können. Die von der Auswerte- und Analyseroutine AAR ermittelte Qualität und/oder Quantität wird sodann beispielsweise mit einem vorgegebenen Soll-Qualität bzw. einer Soll-Quantität verglichen, welche die Referenzwerte RW bilden, und abhängig vom Vergleichsergebnis ist ein Rückschluss darauf möglich, ob die bereitgestellten instandhaltungs- und/oder wartungsrelevanten Mess-, Betriebs- und/oder Prozessdaten MSD zur Bereitstellung der gewünschten Instandhaltungs- und/oder Wartungsdienste IWD ausreichend sind. Beispielsweise erfordern vorausschauende und/oder zustandsüberwachende Instandhaltungs- und/oder Wartungsdienste IWD eine regelmäßige oder permanente Bereitstellung von Daten MSD in ausreichender Qualität und/oder Quantität.

Werden durch den Anlagenbetreiber kontinuierlich instandhaltungs- und/oder wartungsrelevante Mess-, Betriebs- und/oder Prozessdaten MSD in ausreichender Qualität und/oder Quantität bereitgestellt, so wird beispielsweise in der Diagnose- und Fernwartungseinheit 3.2 der Anlagenserviceeinrichtung 3 die Anlage 2 priorisiert behandelt. Beispielsweise kann als Instandhaltungs- und/oder Wartungsdienst IWD ein vorausschauender Instandhaltungsdienst für die Anlage 2 oder eine hochpriorisierte, automatisch gesteuerte Belieferung mit Ersatzteilen bereitgestellt werden.

Auch können dem Anlagenbetreiber als Zusatzleistung für die Bereitstellung der Daten MSD monetäre Vergünstigungen automatisiert eingeräumt werden, und zwar können beispielsweise abhängig von der bereitgestellten Qualität und/oder Quantität der Daten MSD die den Wartungs- und/oder Instandhaltungsdiensten IWD zugeordneten Vergütungsdaten und/oder den Ersatzteilen zugeordneten Preisdaten in einem mit der Anlagenserviceeinrichtung 3 verbundenen Abrechnungssystem des Anlagenherstellers oder dessen Servicepartner automatisch angepasst werden. Auch ist ein Bonussystem denkbar, in welchen Bonuspunkte erfasst werden, die zum Erhalt monetärer Vergünstigungen Verwendung finden können. Hierzu wird beispielsweise in der Datenmanagementroutine DMR ein Vergütungssystem und/oder Vergütungsmodell ("Micropayment") bereitgestellt, in welchen die erworbenen monetären Vergünstigungen oder Bonuspunkte erfasst und an beispielsweise an daran angeschlossenes Bestell- und/oder Abrechnungssystem weitergeleitet werden können. Neben einer Priorisierung der Bereitstellung von bereitgestellten Instandhaltungs- und/oder Wartungsdienst IWD können damit mit dem erfindungsgemäßen System 1 auch monetäre Anreize für den Anlagenbetreiber geschaffen werden.

Zur Ermittlung der Quantität der Daten MSD wird vorzugsweise die Anzahl der bereitgestellten Datenpakete oder die Anzahl von individuell vom Anlagenhersteller festlegbaren Dateneinheiten ermittelt und mit einem Referenzwert RW verglichen. Nur bei einem Erreichen oder Überschreiten des vorgegebenen Referenzwertes RW werden die bereitgestellten Daten MSD als ausreichend bewertet.

Beispielweise können den unterschiedlichen Datentypen und/oder Datenarten der instandhaltungs- und/oder wartungsrelevanten Mess-, Betriebs- und/oder Prozessdaten MSD eine wertgebende Komponenten zugeordnet werden, über welche eine Qualifizierung der Daten und damit eine Aussage über die Qualität der erhaltenen Daten MSD möglich ist, wobei auch die erforderliche Soll-Quantität auch abhängig von der bereitgestellten Qualität der erhaltenen Daten MSD variieren kann. Hierzu ist die Auswerte- und Analyseroutine AAR beispielsweise zur Unterscheidung von unterschiedlichen Datentypen und/oder Datenarten eingerichtet, wobei den unterschiedlichen Datentypen und/oder Datenarten vorzugsweise auch unterschiedliche wertgebende Komponenten zugeordnet sind, wodurch eine Bewertung der Daten MSD hinsichtlich ihrer Instandhaltungs- und/oder Wartungsrelevanz möglich wird. Beispielsweise kann Datentypen und/oder Datenarten mit einer höheren Instandhaltungs- und/oder Wartungsrelevanz eine höhere wertgebende Komponente zugeordnet werden als Datentypen und/oder Datenarten mit einer niedrigeren Instandhaltungs- und/oder Wartungsrelevanz.

In einer bevorzugten Ausführungsvariante umfasst die Auswerte- und Analyseroutine AAR einen adaptiven bzw. selbstlernenden Algorithmus, über welchen abhängig von den Erkenntnissen der Auswertung bzw. Analyse der Daten MSD die den Datentypen und/oder Datenarten zugeordneten wertgebenden Komponenten und/oder die vorgegebene Soll-Quantität und/oder Soll-Qualität individuell angepasst werden, d.h. damit können diejenigen Datensätze der instandhaltungs- und/oder wartungsrelevanten Mess-, Betriebs- und/oder Prozessdaten MSD bestimmt werden, welche die größte Relevanz für die Instandhaltung und/oder Wartung der Anlage 2 aufweisen und damit vorteilhaft der Umfang der auszuwertenden Daten reduziert werden.

Wird jedoch durch die Auswerte- und Analyseroutine AAR festgestellt, dass die bereitgestellten instandhaltungs- und/oder wartungsrelevanten Mess-, Betriebs- und/oder Prozessdaten MSD nicht ausreichend sind, und zwar im Hinblick auf Qualität und/oder Quantität, um Instandhaltungs- und/oder Wartungsdienste IWD mit einer ausreichenden Qualität und/oder Zuverlässigkeit bereitstellen zu können, kann die Bereitstellung der Instandhaltungs- und/oder Wartungsdienst IWD zumindest teilweise eingestellt werden und/oder die zur Erfassung der instandhaltungs- und/oder wartungsrelevanten Mess-, Betriebs- und/oder Prozessdaten MSD vorgesehenen Mess- und/oder Sensoreinheiten 5.1 bis 5.x, 6.1 bis 6.x gesteuert durch die Diagnose- und Fernwartungseinheit 3.2 und/oder die Anlagensteuereinheit 2.3 ein- oder ausgeschaltet werden. Durch das Zuschalten von weiteren, für die Erfassung von instandhaltungs- und/oder wartungsrelevanten Mess-, Betriebs- und/oder Prozessdaten MSD relevanten Mess- und/oder Sensoreinheiten 5.1 bis 5.x, 6.1 bis 6.x kann die Qualität und/oder Quantität der Daten MSD erhöht werden.

Jedoch können auch ausgewählte Mess- und/oder Sensoreinheiten 5.1 bis 5.x, 6.1 bis 6.x aus- bzw. abgeschaltet werden, wenn in der Auswerte- und Analyseroutine AAR festgestellt wird, dass der Anlagenhersteller nicht bereit ist, die instandhaltungs- und/oder wartungsrelevanten Mess-, Betriebs- und/oder Prozessdaten MSD in ausreichender Qualität und/oder Quantität zu liefern. Es werden dann auch durch die Diagnose- und Fernwartungseinheit 3.2 keine oder eine geringe Anzahl an Instandhaltungs- und/oder Wartungsdienste(n) IWD für die Anlage 2 bereitgestellt und die für die Anlage 2 vorgesehene Priorisierung in Bezug auf Ersatzlieferungen, Wartungs- und Instandhaltungstätigkeiten aufgehoben, d.h. die zugeordneten erhöhten Service- und Wartungskriterien für die Anlage 2 entfallen Beispielsweise kann auch bei nicht ausreichender Bereitstellung von instandhaltungs- und/oder wartungsrelevanten Mess-, Betriebs- und/oder Prozessdaten MSD das Wartungsintervall verkürzt und/oder die Produktionsleistung der Anlage 2 automatisiert gedrosselt werden.

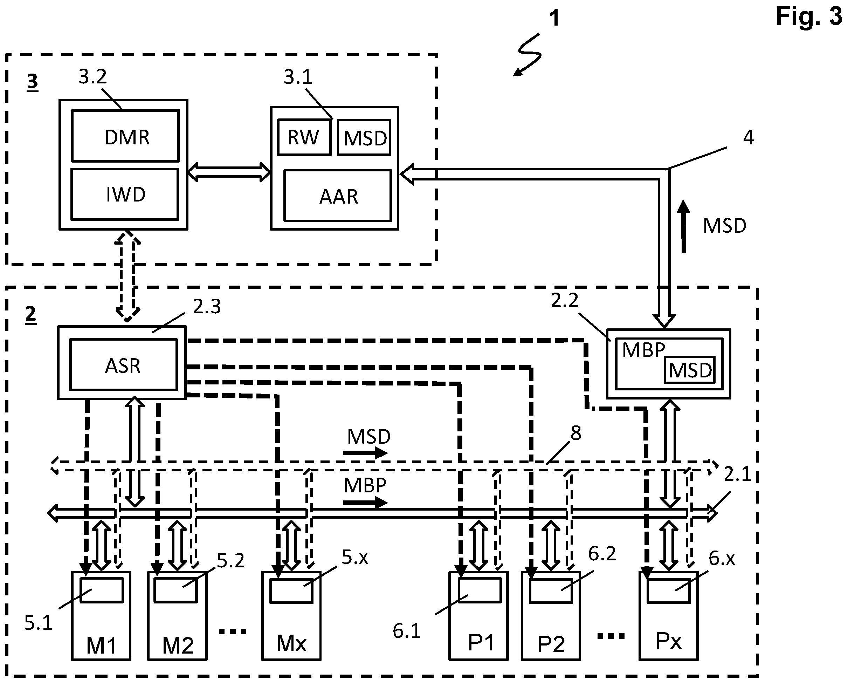

In einer alternativen Ausführungsvariante gemäß Figur 3 ist zusätzlich zum Datenübertragungsnetzwerk 2.1 ein weiteres Datenübertragungsnetzwerk 8 in der Anlage 2 vorgesehen, welches drahtlos oder drahtgebunden realisiert sein kann. Das weitere Datenübertragungsnetzwerk 8 ist ebenfalls mit der Datensammeleinheit 2.2 sowie den einzelnen Maschinen M1 bis Mx als auch den einzelnen Prozessen P1 bis Px verbunden. Dieses weitere Datenübertragungsnetzwerk 8 kann beispielsweise vom Anlagenhersteller bereitgestellt oder bei bestehenden Anlagen nachgerüstet werden. Die Übertragung der instandhaltungs- und/oder wartungsrelevanten Mess-, Betriebs- und/oder Prozessdaten MSD erfolgt damit in der Anlage 2 ausschließlich über das weitere Datenübertragungsnetzwerk 8, so dass das Datenübertragungsnetzwerk 2.1 weniger belastet wird. Die Übertragung der an sich zeit- und/oder prozessunkritischen Mess-, Betriebs- und/oder Prozessdaten MSD wird damit von den zeitkritischen und/oder prozessrelevanten Daten innerhalb der Anlage 2 entkoppelt.

Auch kann ein maschinen- und/oder prozessbezogen Erfassung der instandhaltungs- und/oder wartungsrelevanten Mess-, Betriebs- und/oder Prozessdaten MSD in der Anlage 2 erfolgen, wobei hierzu jeder Maschinen M1 bis Mx und/oder jedem Prozess P1 bis Px eine eigene Datenerfassungseinheit (nicht in den Figuren dargestellt) zugeordnet ist, über welche die instandhaltungs- und/oder wartungsrelevanten Mess-, Betriebs- und/oder Prozessdaten MSD maschinen- und/oder prozessbezogen erfasst und über das weitere Datenübertragungsnetzwerk 8 an die Datensammeleinheit 2.2 zur Weiterleitung an die Anlagenserviceeinrichtung 3 übertragen werden.

Die Erfindung wurde voranstehend an Ausführungsbeispielen beschrieben. Es versteht sich, dass eine Vielzahl von Änderungen oder Abwandlungen möglich sind, ohne dass dadurch der durch die Patentansprüche definierte Schutzbereich der Erfindung verlassen wird.

### Bezugszeichenliste

- 1: System
- 2: Anlage
- 2.1: Datenübertragungsnetzwerk
- 2.2: Datensammeleinheit
- 2.3: Anlagensteuereinheit
- 3: Anlagenserviceeinrichtung
- 3.1: Datenauswerteeinheit
- 3.2: Diagnose- und Fernwartungseinheit
- 4: Datenübertragungsschnittstelle
- 5.1 bis 5.x: Mess- und/oder Sensoreinheiten
- 6.1 bis 6.x: Mess- und/oder Sensoreinheiten
- 7: Cloud-Speicher-Einrichtung
- 8: weiteres Datenübertragungsnetz

- AAR: Auswerte- und Analyseroutine
- ASR: Anlagensteuerroutine
- DMR: Datenmanagementroutine
- IWD: Instandhaltungs- und/oder Wartungsdienste
- MBP: allgemeine Mess-, Betriebs- und/oder Prozessdaten
- MSD: instandhaltungs- und/oder wartungsrelevante Mess-, Betriebs- und/oder Prozessdaten
- M1 bis Mx: Maschinen
- P1 bis Px: Prozesse
- RW: Referenzwerte (Soll-Qualität, Soll-Quantität)

## Patentansprüche

1. System (1) zur Erfassung und Auswertung von instandhaltungs- und/oder wartungsrelevanten Mess-, Betriebs- und/oder Prozessdaten (MSD) umfassend eine mehrere, zusammenwirkende Maschinen (M1 bis Mx) oder eine Einzelmaschine umfassende Anlage (2) der Getränke- und/oder Verpackungsindustrie, wobei die instandhaltungs- und/oder wartungsrelevanten Mess-, Betriebs- und/oder Prozessdaten (MSD) die Anlage (2) und/oder zumindest einen in der Anlage (2) durchgeführten Prozess (P1 bis Px) betreffen, wobei die Anlage (2) mehrere Mess- und/oder Sensoreinheiten (5.1 - 5.x, 6.1 - 6.x) zur Erfassung der instandhaltungs- und/oder wartungsrelevanten Mess-, Betriebs- und/oder Prozessdaten (MSD) der einzelnen Maschinen (M1 bis Mx) und/oder der einzelnen Prozesse (P1 bis Px) und zumindest eine Datensammeleinheit (2.2) aufweist, wobei die von den Mess- und/oder Sensoreinheiten (5.1 - 5.x, 6.1 - 6.x) erfassten Mess-, Betriebs- und/oder Prozessdaten (MSD) über zumindest ein Datenübertragungsnetzwerk (2.1, 8) der Anlage (2) an die Datensammeleinheit (2.2) übertragen und in dieser gesammelt werden, wobei in dem System (1) weiterhin eine dezentrale, außerhalb der Anlage (2) angeordnete Anlagenserviceeinrichtung (3) mit zumindest einer Datenauswerteeinheit (3.1) und zumindest einer Diagnose- und Fernwartungseinheit (3.2) zur Bereitstellung von Instandhaltungs- und/oder Wartungsdiensten (IWD) vorgesehen ist, wobei zumindest die instandhaltungs- und/oder wartungsrelevanten Mess-, Betriebs- und/oder Prozessdaten (MSD) von der Datensammeleinheit (2.2) zur Auswertung durch die Anlagenserviceeinrichtung (3) außerhalb der Anlage (2) bereitgestellt werden, **dadurch gekennzeichnet, dass** mittels einer in der Datenauswerteeinheit (3.1) ausgeführten Auswerte- und Analyseroutine (AAR) zumindest die Quantität und/oder die Qualität der von der Datensammeleinheit (2.2) bereitgestellten, instandhaltungs- und/oder wartungsrelevanten Mess-, Betriebs- und/oder Prozessdaten (MSD) ermittelt werden und abhängig davon die Bereitstellung der Instandhaltungs- und/oder Wartungsdienste (IWD) gesteuert wird, wobei abhängig von der Qualität und/oder der Quantität der bereitgestellten Mess-, Betriebs- und/oder Prozessdaten (MSD) Mess- und/oder Sensoreinheiten (5.1 - 5.x, 6.1 - 6.x) zu- oder abgeschaltet werden, und wobei zur Erhöhung der Qualität und/oder der Quantität der bereitgestellten Mess-, Betriebs- und/oder Prozessdaten (MSD) weitere Mess- und/oder Sensoreinheiten (5.1 bis 5.x, 6.1 bis 6.x) zugeschaltet werden.

2. System (1) nach Anspruch 1,
**dadurch gekennzeichnet, dass** die Diagnose- und Fernwartungseinheit (3.2) zur Steuerung der Bereitstellung der Instandhaltungs- und/oder Wartungsdienste (IWD) eingerichtet ist.

3. System (1) nach Anspruch 1 oder 2,
**dadurch gekennzeichnet, dass** abhängig von der ermittelten Quantität und/oder Qualität der instandhaltungs- und/oder wartungsrelevanten Mess-, Betriebs- und/oder Prozessdaten (MSD) die zur Erfassung der instandhaltungs- und/oder wartungsrelevanten Mess-, Betriebs- und/oder Prozessdaten (MSD) vorgesehenen Mess- und/oder Sensoreinheiten (5.1 - 5.x, 6.1 - 6.x) und/oder die Anlagenleistung gesteuert werden.

4. System (1) nach einem der vorhergehenden Ansprüche,
**dadurch gekennzeichnet, dass** die Mess- und/oder Sensoreinheiten (5.1 - 5.x, 6.1 - 6.x) abhängig von der Qualität und/oder der Quantität der bereitgestellten Mess-, Betriebs- und/oder Prozessdaten (MSD) ein- oder ausgeschaltet werden.

5. System (1) nach einem der vorhergehenden Ansprüche,
**dadurch gekennzeichnet, dass** zur Ermittlung der Qualität und/oder Quantität von der Auswerte- und Analyseroutine (AAR) die bereitgestellten Mess-, Betriebs- und/oder Prozessdaten (MSD) analysiert und mit vorgegebenen Referenzwerten (RW), beispielsweise einer Soll-Qualität bzw. einer Soll-Quantität, verglichen werden und abhängig vom Vergleichsergebnis bestimmt wird, ob die bereitgestellten instandhaltungs- und/oder wartungsrelevanten Mess-, Betriebs- und/oder Prozessdaten (MSD) ausreichend zur Bereitstellung der Instandhaltungs- und/oder Wartungsdienste (IWD) sind.

6. System (1) nach einem der vorhergehenden Ansprüche,
**dadurch gekennzeichnet, dass** die instandhaltungs- und/oder wartungsrelevanten Mess-, Betriebs- und/oder Prozessdaten (MSD) unterschiedliche Datentypen und/oder Datenarten aufweisen und dass in der Datenauswerteeinheit (3.1) den unterschiedlichen Datentypen und/oder Datenarten der instandhaltungs- und/oder wartungsrelevanten Mess-, Betriebs- und/oder Prozessdaten (MSD) eine wertgebende Komponente zugeordnet wird.

7. System (1) nach Anspruch 6, **dadurch gekennzeichnet,**
**dass** die wertgebende Komponente die Instandhaltungs- und/oder Wartungsrelevanz eines Datentyps und/oder einer Datenarten anzeigt.

8. System (1) nach einem der vorhergehenden Ansprüche,
**dadurch gekennzeichnet, dass** zur Ermittlung der Quantität der instandhaltungs- und/oder wartungsrelevanten Mess-, Betriebs- und/oder Prozessdaten (MSD) die Anzahl der bereitgestellten Datenpakete oder die Anzahl von vordefinierten Datenmengeneinheiten ermittelt und mit einem Referenzwert (RW), vorzugsweise einer Soll-Quantität, verglichen wird.

9. System (1) nach einem der vorhergehenden Ansprüche,
**dadurch gekennzeichnet, dass** abhängig von der bereitgestellten Qualität und/oder Quantität der instandhaltungs- und/oder wartungsrelevanten Mess-, Betriebs- und/oder Prozessdaten (MSD) den Wartungs- und/oder Instandhaltungsdiensten (IWD) zugeordnete Vergütungsdaten angepasst werden und/oder in einem Bonussystem Bonuspunkte erfasst werden.

10. System (1) nach einem der vorhergehenden Ansprüche,
**dadurch gekennzeichnet, dass** abhängig von der bereitgestellten Qualität und/oder Quantität der instandhaltungs- und/oder wartungsrelevanten Mess-, Betriebs- und/oder Prozessdaten (MSD) zusätzliche Wartungs- und/oder Instandhaltungsdienste (IWD) und/oder der Anlage (2) eine höhere Wartungs- und/oder Instandhaltungspriorität zugeordnet wird.

11. System (1) nach einem der vorhergehenden Ansprüche,
**dadurch gekennzeichnet, dass** die Bereitstellung der instandhaltungs- und/oder wartungsrelevanten Mess-, Betriebs- und/oder Prozessdaten (MSD) über eine drahtlose oder drahtgebundene Datenübertragungsschnittstelle (4) direkt an die Anlagenserviceeinrichtung (3) erfolgt.

12. System (1) nach einem der vorhergehenden Ansprüche,
**dadurch gekennzeichnet, dass** die instandhaltungs- und/oder wartungsrelevanten Mess-, Betriebs- und/oder Prozessdaten (MSD) von der Anlage (2) an eine Speichereinrichtung, insbesondere an eine Cloud-Speicher-Einrichtung (7), übertragen werden.

13. Verfahren zur Erfassung und Auswertung von instandhaltungs- und/oder wartungsrelevanten Mess-, Betriebs- und/oder Prozessdaten (MSD) in einem System (1) umfassend eine mehrere, zusammenwirkende Maschinen (M1 bis Mx) oder eine Einzelmaschine aufweisende Anlage (2) der Getränke- und/oder Verpackungsindustrie, wobei die instandhaltungs- und/oder wartungsrelevanten Mess- , Betriebs- und/oder Prozessdaten (MSD) die Anlage (2) und/oder zumindest einen in der Anlage (2) durchgeführten Prozess (P1 bis Px) betreffen, wobei die Anlage (2) mehrere Mess- und/oder Sensoreinheiten (5.1 - 5.x, 6.1 - 6.x) zur Erfassung der instandhaltungs- und/oder wartungsrelevanten Mess-, Betriebs- und/oder Prozessdaten (MSD) der einzelnen Maschinen (M1 bis Mx) und/oder der einzelnen Prozesse (P1 bis Px) und zumindest eine Datensammeleinheit (2.2) aufweist, wobei die von den Mess- und/oder Sensoreinheiten (5.1 - 5.x, 6.1 - 6.x) erfassten Mess-, Betriebs- und/oder Prozessdaten (MSD) über zumindest ein Datenübertragungsnetzwerk (2.1, 8) der Anlage (2) an die Datensammeleinheit (2.2) übertragen und in dieser gesammelt werden, wobei in dem System (1) eine dezentrale, außerhalb der Anlage (2) angeordnete Anlagenserviceeinrichtung (3) mit zumindest einer Datenauswerteeinheit (3.1) und zumindest einer Diagnose- und Fernwartungseinheit (3.2) zur Bereitstellung von Instandhaltungs- und/oder Wartungsdiensten (IWD) vorgesehen ist, wobei zumindest die instandhaltungs- und/oder wartungsrelevanten Mess-, Betriebs- und/oder Prozessdaten (MSD) von der Datensammeleinheit (2.2) zur Auswertung durch die Anlagenserviceeinrichtung (3) außerhalb der Anlage (2) bereitgestellt werden, **dadurch gekennzeichnet, dass** mittels einer in der Datenauswerteeinheit (3.1) ausgeführten Auswerte- und Analyseroutine (AAR) zumindest die Quantität und/oder die Qualität der von der Datensammeleinheit (2.2) bereitgestellten, instandhaltungs- und/oder wartungsrelevanten Mess-, Betriebs- und/oder Prozessdaten (MSD) ermittelt werden und abhängig davon die Bereitstellung der Instandhaltungs- und/oder Wartungsdienste (IWD) gesteuert wird und wobei abhängig von der Qualität und/oder der Quantität der bereitgestellten Mess-, Betriebs- und/oder Prozessdaten (MSD) Mess- und/oder Sensoreinheiten (5.1 - 5.x, 6.1 - 6.x) zu- oder abgeschaltet werden, und wobei zur Erhöhung der Qualität und/oder der Quantität der bereitgestellten Mess- , Betriebs- und/oder Prozessdaten (MSD) weitere Mess- und/oder Sensoreinheiten (5.1 bis 5.x, 6.1 bis 6.x) zugeschaltet werden.

## Claims

1. System (1) for recording and evaluating measurement, operating and/or process data (MSD) relevant to maintenance and/or servicing, comprising a plant (2) in the beverage and/or packaging industry consisting of a plurality of interacting machines (M1 to Mx) or a single machine, wherein the measurement, operating and/or process data (MSD) relevant to maintenance and/or servicing relates to the plant (2) and/or at least one process (P1 to Px) carried out in the plant (2), wherein the plant (2) has a plurality of measuring and/or sensor units (5.1 - 5.x, 6.1 - 6.x) for recording the measurement, operating and/or process data (MSD) of the individual machines (M1 to Mx) and/or the individual processes (P1 to Px) relevant to maintenance and/or servicing, and at least one data collection unit (2.2), wherein the measurement, operating and/or process data (MSD) recorded by the measuring and/or sensor units (5.1 - 5.x, 6.1 - 6.x) is transmitted via at least one data transmission network (2.1, 8) of the plant (2) to the data collection unit (2.2) and collected in the latter, wherein the system (1) further includes a decentralised plant service facility arranged (3) outside the plant (2) with at least one data evaluation unit (3.1) and at least one diagnostic and remote maintenance unit (3.2) for providing maintenance and/or servicing services (IWD), wherein at least the measurement, operating and/or process data (MSD) relevant to maintenance and/or servicing is supplied by the data collection unit (2.2) for evaluation by the plant service facility (3) outside the plant (2), **characterised in that,** by means of an evaluation and analysis routine (AAR) executed in the data evaluation unit (3.1), at least the quantity and/or the quality of the measurement, operating and/or process data (MSD) relevant to maintenance and/or servicing supplied by the data collection unit (2.2) is determined and the provision of the maintenance and/or servicing services (IWD) is controlled depending thereon, wherein measuring and/or sensor units (5.1 - 5.x, 6.1 - 6.x) are activated or deactivated depending on the quality and/or quantity of the supplied measurement, operating and/or process data (MSD), and wherein further measuring and/or sensor units (5.1 to 5.x, 6.1 to 6.x) can be activated to increase the quality and/or quantity of the supplied measurement, operating and/or process data (MSD).

2. System (1) according to claim 1,
**characterised in that** the diagnostic and remote maintenance unit (3.2) is configured to control the provision of the maintenance and/or servicing services (IWD).

3. System (1) according to claim 1 or 2,
**characterised in that** the measuring and/or sensor units (5.1 - 5.x, 6.1 - 6.x) provided for recording the measuring, operating and/or process data (MSD) relevant to maintenance and/or servicing are controlled depending on the identified quantity and/or quality of the measuring, operating and/or process data (MSD) relevant to maintenance and/or servicing.

4. System (1) according to any of the preceding claims,
**characterised in that** the measuring and/or sensor units (5.1 - 5.x, 6.1 - 6.x) are switched on or off depending on the quality and/or quantity of the supplied measurement, operating and/or process data (MSD).

5. System (1) according to any of the preceding claims,
**characterised in that**, in order to identify the quality and/or quantity, the evaluation and analysis routine (AAR) analyses the supplied measurement, operating and/or process data (MSD) and compares it with predefined reference values (RW), for example a target quality or a target quantity, and, depending on the comparison result, determines whether the supplied measurement, operating and/or process data (MSD) relevant to maintenance and/or servicing is sufficient to provide the maintenance and/or servicing services (IWD).

6. System (1) according to any of the preceding claims,
**characterised in that** the measurement, operating and/or process data (MSD) relevant to maintenance and/or servicing comprises different data types and a value-giving component is assigned to the different data types of the measurement, operating and/or process data MSD) relevant to maintenance and/or servicing in the data evaluation unit (3.1).

7. System (1) according to claim 6,
**characterised in that** the value-giving component indicates the maintenance and/or servicing relevance of a data type.

8. System (1) according to any of the preceding claims,
**characterised in that**, in order to determine the quantity of measurement, operating and/or process data (MSD) relevant to maintenance and/or servicing, the number of supplied data packets or the number of predefined data volume units is determined and compared with a reference value (RW), preferably a target quantity.

9. System (1) according to any of the preceding claims,
**characterised in that**, depending on the supplied quality and/or quantity of the measurement, operating and/or process data (MSD) relevant to maintenance and/or servicing, compensation data assigned to the maintenance and/or servicing services (IWD) can be adjusted and/or bonus points can be recorded in a bonus system.

10. System (1) according to any of the preceding claims,
**characterised in that**, depending on the supplied quality and/or quantity of the measurement, operating and/or process data (MSD) relevant to maintenance and/or servicing, additional maintenance and/or servicing services (IWD) are provided and/or the plant (2) is assigned a higher maintenance and/or servicing priority.

11. System (1) according to any of the preceding claims,
**characterised in that** the measurement, operating and/or process data (MSD) relevant to maintenance and/or servicing is provided directly to the plant service facility (3) via a wireless or wired data transmission interface (4).

12. System (1) according to any of the preceding claims,
**characterised in that** the measurement, operating and/or process data (MSD) relevant to maintenance and/or servicing is transmitted from the plant (2) to a storage facility, in particular a cloud storage facility (7).

13. Method (1) for recording and evaluating measurement, operating and/or process data (MSD) relevant to maintenance and/or servicing in a system (1) comprising a plant (2) in the beverage and/or packaging industry consisting of a plurality of interacting machines (M1 to Mx) or a single machine, wherein the measurement, operating and/or process data (MSD) relevant to maintenance and/or servicing relates to the plant (2) and/or at least one process (P1 to Px) carried out in the plant (2), wherein the plant (2) has a plurality of measuring and/or sensor units (5.1 - 5.x, 6.1 - 6.x) for recording the measurement, operating and/or process data (MSD) of the individual machines (M1 to Mx) and/or the individual processes (P1 to Px) relevant to maintenance and/or servicing, and at least one data collection unit (2.2), wherein the measurement, operating and/or process data (MSD) recorded by the measuring and/or sensor units (5.1 - 5.x, 6.1 - 6.x) is transmitted via at least one data transmission network (2.1, 8) of the plant (2) to the data collection unit (2.2) and collected in the latter, wherein the system (1) further includes a decentralised plant service facility arranged (3) outside the plant (2) with at least one data evaluation unit (3.1) and at least one diagnostic and remote maintenance unit (3.2) for providing maintenance and/or servicing services (IWD), wherein at least the measurement, operating and/or process data (MSD) relevant to maintenance and/or servicing is supplied by the data collection unit (2.2) for evaluation by the plant service facility (3) outside the plant (2), **characterised in that,** by means of an evaluation and analysis routine (AAR) executed in the data evaluation unit (3.1), at least the quantity and/or the quality of the measurement, operating and/or process data (MSD) relevant to maintenance and/or servicing supplied by the data collection unit (2.2) is determined and the provision of the maintenance and/or servicing services (IWD) is controlled depending thereon, wherein measuring and/or sensor units (5.1 - 5.x, 6.1 - 6.x) are activated or deactivated depending on the quality and/or quantity of the supplied measurement, operating and/or process data (MSD), and wherein further measuring and/or sensor units (5.1 to 5.x, 6.1 to 6.x) can be activated to increase the quality and/or quantity of the supplied measurement, operating and/or process data (MSD).

## Revendications

1. Système (1) d'acquisition et d'évaluation de données de mesure, d'exploitation et/ou de processus (MSD) pertinentes pour la maintenance et/ou l'entretien comprenant une installation (2) de l'industrie des boissons et/ou de l'emballage comprenant plusieurs machines (M1 à Mx) en coopération ou une machine unique, dans lequel les données de mesure, d'exploitation et/ou de processus (MSD) pertinentes pour la maintenance et/ou l'entretien concernent l'installation (2) et/ou au moins un processus (P1 à Px) effectué dans l'installation (2), dans lequel l'installation (2) présente plusieurs unités de mesure et/ou de détection (5.1 - 5.x, 6.1 - 6.x) pour l'acquisition des données de mesure, d'exploitation et/ou de processus (MSD) pertinentes pour la maintenance et/ou l'entretien des différentes machines (M1 à Mx) et/ou des différents processus (P1 à Px) et au moins une unité de collecte de données (2.2), dans lequel les données de mesure, d'exploitation et/ou de processus (MSD) acquises par les unités de mesure et/ou de détection (5.1 - 5.x, 6.1 - 6.x) sont transmises via au moins un réseau de transmission de données (2.1, 8) de l'installation (2) à l'unité de collecte de données (2.2) et collectées dans celle-ci, dans lequel un dispositif de service à l'installation (3) décentralisé, disposé en dehors de l'installation (2) avec au moins une unité d'évaluation de données (3.1) et au moins une unité de diagnostic et d'entretien à distance (3.2) pour la fourniture de services de maintenance et/ou d'entretien (IWD) est en outre prévu dans le système (1), dans lequel au moins les données de mesure, d'exploitation et/ou de processus (MSD) pertinentes pour la maintenance et/ou l'entretien sont fournies par l'unité de collecte de données (2.2) à des fins d'évaluation par le dispositif de service à l'installation (3) en dehors de l'installation (2), **caractérisé en ce qu'**au moyen d'une routine d'évaluation et d'analyse (AAR) exécutée dans l'unité d'évaluation de données (3.1), au moins la quantité et/ou la qualité des données de mesure, d'exploitation et/ou de processus (MSD) pertinentes pour la maintenance et/ou l'entretien fournies par l'unité de collecte de données (2.2) sont déterminées et la fourniture des services de maintenance et/ou d'entretien (IWD) est commandée en fonction de celles-ci, dans lequel, en fonction de la qualité et/ou de la quantité des données de mesure, d'exploitation et/ou de processus (MSD) fournies, des unités de mesure et/ou de détection (5.1 - 5.x, 6.1 - 6.x) sont activées ou désactivées, et dans lequel, pour augmenter la qualité et/ou la quantité des données de mesure, d'exploitation et/ou de processus (MSD) fournies, d'autres unités de mesure et/ou de détection (5.1 à 5.x, 6.1 à 6.x) sont activées.

2. Système (1) selon la revendication 1,
**caractérisé en ce que** l'unité de diagnostic et d'entretien à distance (3.2) est conçue pour commander la fourniture des services de maintenance et/ou d'entretien (IWD).

3. Système (1) selon la revendication 1 ou 2,
**caractérisé en ce que** les unités de mesure et/ou de détection (5.1 - 5.x, 6.1 - 6.x) prévues pour l'acquisition des données de mesure, d'exploitation et/ou de processus (MSD) pertinentes pour la maintenance et/ou l'entretien et/ou la puissance de l'installation sont commandées en fonction de la quantité et/ou qualité déterminée des données de mesure, d'exploitation et/ou de processus (MSD) pertinentes pour la maintenance et/ou l'entretien.

4. Système (1) selon l'une quelconque des revendications précédentes,
**caractérisé en ce que** les unités de mesure et/ou de détection (5.1 - 5.x, 6.1 - 6.x) sont allumées ou éteintes en fonction de la qualité et/ou de la quantité des données de mesure, d'exploitation et/ou de processus (MSD) fournies.

5. Système (1) selon l'une quelconque des revendications précédentes,
**caractérisé en ce que**, pour déterminer la qualité et/ou quantité de la routine d'évaluation et d'analyse (AAR), les données de mesure, d'exploitation et/ou de processus (MSD) fournies sont analysées et comparées à des valeurs de référence (RW) prédéfinies, par exemple une qualité théorique ou une quantité théorique et, en fonction du résultat de la comparaison, il est déterminé si les données de mesure, d'exploitation et/ou de processus (MSD) pertinentes pour la maintenance et/ou l'entretien fournies sont suffisantes pour la fourniture des services de maintenance et/ou d'entretien (IWD).

6. Système (1) selon l'une quelconque des revendications précédentes,
**caractérisé en ce que** les données de mesure, d'exploitation et/ou de processus (MSD) pertinentes pour la maintenance et/ou l'entretien présentent différent(e)s types de données et/ou sortes de données et qu'une composante donnant une valeur est attribuée aux différent(e)s types de données et/ou sortes de données des données de mesure, d'exploitation et/ou de processus (MSD) pertinentes pour la maintenance et/ou l'entretien dans l'unité d'évaluation de données (3.1).

7. Système (1) selon la revendication 6, **caractérisé en ce**
**que** la composante donnant une valeur indique la pertinence de la maintenance et/ou de l'entretien d'un type de données et/ou d'une sorte de données.

8. Système (1) selon l'une quelconque des revendications précédentes,
**caractérisé en ce que**, pour déterminer la quantité des données de mesure, d'exploitation et/ou de processus (MSD) pertinentes pour la maintenance et/ou l'entretien, le nombre de paquets de données fournis ou le nombre d'unités de quantité de données prédéfinies est déterminé et comparé à une valeur de référence (RW), de préférence une quantité théorique.

9. Système (1) selon l'une quelconque des revendications précédentes,
**caractérisé en ce que**, en fonction de la qualité et/ou quantité fournie des données de mesure, d'exploitation et/ou de processus (MSD) pertinentes pour la maintenance et/ou l'entretien, des données de rémunération attribuées aux services de maintenance et/ou d'entretien (IWD) sont adaptées et/ou des points de bonus sont acquis dans un système de bonus.

10. Système (1) selon l'une quelconque des revendications précédentes,
**caractérisé en ce que**, en fonction de la qualité et/ou quantité fournie des données de mesure, d'exploitation et/ou de processus (MSD) pertinentes pour la maintenance et/ou l'entretien, une priorité de maintenance et/ou d'entretien plus élevée est attribuée à des services de maintenance et/ou d'entretien (IWD) et/ou de l'installation (2) supplémentaires.

11. Système (1) selon l'une quelconque des revendications précédentes,
**caractérisé en ce que** la fourniture des données de mesure, d'exploitation et/ou de processus (MSD) pertinentes pour la maintenance et/ou l'entretien s'effectue directement au moyen d'une interface de transmission de données sans fil ou filaire (4) au dispositif de service à l'installation (3).

12. Système (1) selon l'une quelconque des revendications précédentes,
**caractérisé en ce que** les données de mesure, d'exploitation et/ou de processus (MSD) pertinentes pour la maintenance et/ou l'entretien sont transmises de l'installation (2) à un dispositif de stockage, en particulier à un dispositif de stockage dans le nuage (7).

13. Procédé d'acquisition et d'évaluation de données de mesure, d'exploitation et/ou de processus (MSD) pertinentes pour la maintenance et/ou l'entretien dans un système (1) comprenant une installation (2) de l'industrie des boissons et/ou de l'emballage présentant plusieurs machines (M1 à Mx) en coopération ou une machine (2) unique, dans lequel les données de mesure, d'exploitation et/ou de processus (MSD) pertinentes pour la maintenance et/ou l'entretien concernent l'installation (2) et/ou au moins un processus (P1 à Px) effectué dans l'installation (2), dans lequel l'installation (2) présente plusieurs unités de mesure et/ou de détection (5.1 - 5.x, 6.1 - 6.x) pour l'acquisition des données de mesure, d'exploitation et/ou de processus (MSD) pertinentes pour la maintenance et/ou l'entretien des différentes machines (M1 à Mx) et/ou des différents processus (P1 à Px) et au moins une unité de collecte de données (2.2), dans lequel les données de mesure, d'exploitation et/ou de processus (MSD) acquises par les unités de mesure et/ou de détection (5.1 - 5.x, 6.1 - 6.x) sont transmises via au moins un réseau de transmission de données (2.1, 8) de l'installation (2) à l'unité de collecte de données (2.2) et collectées dans celle-ci, dans lequel un dispositif de service à l'installation (3) décentralisé disposé en dehors de l'installation (2) avec au moins une unité d'évaluation de données (3.1) et au moins une unité de diagnostic et d'entretien à distance (3.2) pour fournir des services de maintenance et/ou d'entretien (IWD) est prévu dans le système (1), dans lequel au moins les données de mesure, d'exploitation et/ou de processus (MSD) pertinentes pour la maintenance et/ou l'entretien sont fournies par l'unité de collecte de données (2.2) à des fins d'évaluation par le dispositif de service à l'installation (3) en dehors de l'installation (2), **caractérisé en ce qu'**au moyen d'une routine d'évaluation et d'analyse (AAR) exécutée dans l'unité d'évaluation de données (3.1), au moins la quantité et/ou la qualité des données de mesure, d'exploitation et/ou de processus (MSD) pertinentes pour la maintenance et/ou l'entretien fournies par l'unité de collecte de données (2.2) sont déterminées et la fourniture des services de maintenance et/ou d'entretien (IWD) est commandée en fonction de celles-ci, et dans lequel, en fonction de la qualité et/ou de la quantité des données de mesure, d'exploitation et/ou de processus (MSD) fournies, des unités de mesure et/ou de détection (5.1 - 5.x, 6.1 - 6.x) sont activées ou désactivées, et dans lequel, pour augmenter la qualité et/ou la quantité des données de mesure, d'exploitation et/ou de processus (MSD) fournies, d'autres unités de mesure et/ou de détection (5.1 à 5.x, 6.1 à 6.x) sont activées.
